# EUROPEAN PATENT APPLICATION

(11) **EP 1 119 117 A1**
(43) Date of publication of application: **25.07.2001**
(21) Application number: 00951926.5
(22) Date of filing: 10.08.2000
(51) Int. Cl.: H04B 7/26, H04J 13/00

(54) **BASE STATION DEVICE, COMMUNICATION TERMINAL, AND TRANSMISSION POWER CONTROL METHOD**

(30) Priority: 20.08.1999 JP 23476699; 19.11.1999 JP 32989999
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0005352
(87) International publication number: WO0115343

(57) **Abstract**

Transmission power commands are fed on up link signals before one slot after estimation of transmission power of a down link just before return for convergence of transmission power values in a first slot into an ideal transmission power value at restart of transmission after suspension. Thereby, it may be realized that a converging rate of the above transmission power values is improved; signal quality of related users sides is improved, or interference power with signals of other users except the above users is reduced.

## Description

### Technical Field

The present invention relates to a base station device, a communication terminal, and a method for transmission power control used in a digital radio communication system.

### Background Art

A CDMA (Code Division Multiple Access) method is one of multiple access technologies, with which a plurality of stations simultaneously communicate with each other at the same frequency band in mobile communication through, for example, car telephones and cell telephones. Though an FDMA (Frequency Division Multiple Access) method, a TDMA (Time Division Multiple Access) method and so on have been known as other technologies, the CDMA method is a method with higher frequency efficiency, and has a capability to accommodate more users, comparing with those of the above other technologies.

In the CDMA method, signals of a certain user are interference signals to other users, and signals of other users are also interference signals to the above user, as a plurality of users commonly use the same frequency band. Therefore, SIRs (Signal Interference Ratios) are required to be constant, regardless of locations of communication terminals, in order to obtain uniform communication quality in one service area. Especially for up links (ULs) from communication terminals to a base station, each mobile station is required, in order to reduce interference with signals of the adjacent stations using the same frequency, to adjust transmission power, so that a base station receives signals, which have constant power and are transmitted from each mobile station.

In case of duplex communication using the CDMA method, an FDD (Frequency Division Duplex) method, in which transmission carrier frequencies for ULs different from those for down links (DLs) from a base station to communication terminals, is usually used. Transmission power control (TPC) by a closed loop, in which received power is measured at a base station, and instructions for increase or decrease in the transmission power is given to communication terminals based on the above measured received power, is usually used for transmission power control in the CDMA/FDD method.

In the digital radio communication system, transmission may be suspended (waited) for a while in some cases. For example, a compressed mode, in which there is provided a suspension interval of data transmission, may be adopted at the base station side. In some cases, there may be large differences in transmission power control values between just before suspension of transmission, and at restart of transmission, as there is no transmission power control during a suspension interval of transmission, when there is the above suspension interval of transmission like the above compressed mode at a base station. In case of high-speed fading with large fluctuations in the quality, the above differences are remarkable. That is, just after restart of transmission, transmission power values deviate greatly from an ideal value in some situations. In the above cases, remarkably degraded signal quality, or too much excessive quality compared with desired quality may be caused, when the transmission power values return to the ideal value. Thereby, there is a problem to cause large interference with signals of other users.

### Disclosure of Invention

The object of the present invention is to provide a base station device, a communication terminal, and a method for transmission power control, by which transmission power values may be quickly returned to an ideal value after restart of transmission, in situations of suspension of transmission for a while.

The subject of the present invention is to transmit information for transmission power control (TPC bit), which is configured to compensate the differences between the signal quality and the desired one of the DLs, as UL signals in a slot just before restart of transmission in case of no signal transmission. Thereby, transmission power values may be quickly converged to the ideal value in situations of suspension of signal transmission for predetermined time, for example, in a W-CDMA (Wideband-CDMA) mobile communication method; and degradation of signal quality at the user side, or, increase in interference with signals of other users, due to errors in transmission power at restart of transmission may be prevented in the compressed mode provided for monitoring other carriers. The present invention may be also applied to situations, other than the compressed mode, where there is suspension of signal transmission for predetermined time.

### Brief description of Drawings

FIG. 1 shows a block diagram of a configuration of a base station device according to an embodiment 1 of the present invention;
FIG. 2 shows a block diagram of a configuration of a communication terminal according to the embodiment 1 of the present invention;
FIG. 3 shows a flow chart of a method for transmission power control in the base station device according to the embodiment 1 of the present invention;
FIG. 4 shows a flow chart of a method for transmission power control in the communication terminal according to the embodiment 1 of the present invention;
FIG. 5A shows an explanatory view of a method for transmission power control according to the present invention;
FIG. 5B shows an explanatory view of another method for transmission power control according to the present invention;
FIG. 6 shows a view of a slot configuration of signals used in the method for transmission power control according to the present invention;
FIG. 7 shows a flow chart for a method for transmission power control in a base station device according to an embodiment 2 of the present invention;
FIG. 8 shows a flow chart for a method for transmission power control in a communication terminal according to the embodiment 2 of the present invention;
FIG. 9 shows a view of a slot configuration of signals used in the method for transmission power control according to the embodiment 2 of the present invention;
FIG. 10 shows a block diagram of a configuration of a communication terminal according to an embodiment 3 of the present invention;
FIG. 11 shows a flow chart for a method for transmission power control in a base station device according to the embodiment 3 of the present invention;
FIG. 12 shows a flow chart for a method for transmission power control in the communication terminal according to the embodiment 3 of the present invention;
FIG. 13 shows an explanatory view of a frame configuration in a compressed mode;
FIG. 14 shows an explanatory view of a method for transmission power control in the communication terminal according to the embodiment 3 of the present invention;
FIG. 15 shows an explanatory view of transmission in a compressed mode according to an embodiment 4 of the present invention;
FIG. 16 shows a block diagram of a configuration of a base station device according to an embodiment 5 of the present invention;
FIG. 17 shows a block diagram of a configuration of a communication terminal according to an embodiment 6 of the present invention; and
FIG. 18 shows a block diagram of a configuration of a communication terminal according to an embodiment 7 of the present invention.

### Best Mode for Carrying Out the Invention

Hereinafter, embodiments of the present invention will be described in details, referring to attached drawings.

### (Embodiment 1)

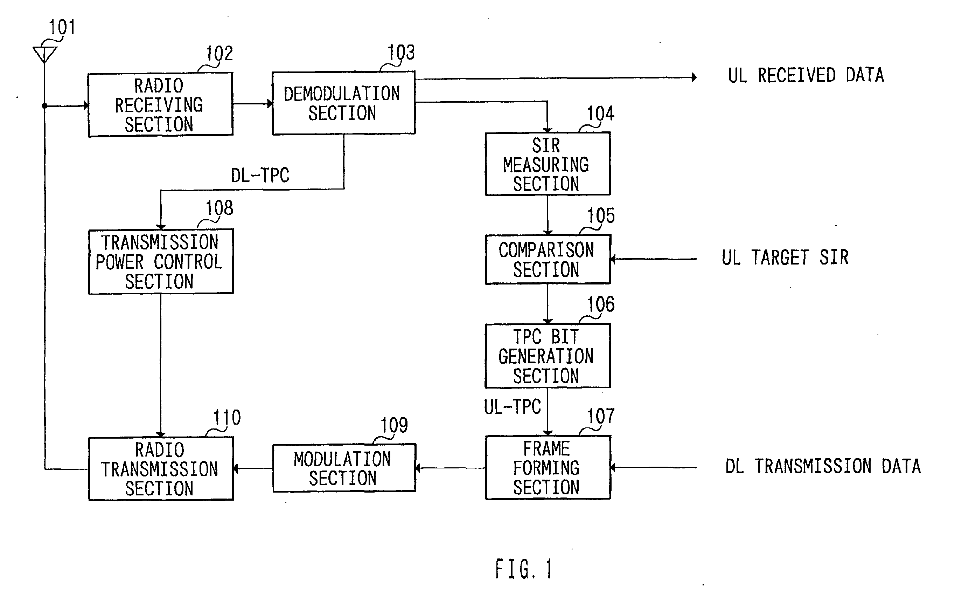

FIG. 1 shows a block diagram of a configuration of a base station device according to an embodiment 1 of the present invention. In FIG. 1, predetermined processing, such as frequency conversion, of signals received from communication terminals through an antenna 101 is performed in a radio receiving section 102. The received signals after the above predetermined processing are demodulated in a demodulating section 103. The demodulated signals are obtained as received data on ULs (UL received data), and fed to an SIR measuring section 104.

In the above SIR measuring section 104, the SIRs of the demodulated signals are measured. The measured SIRs are compared with a target SIR on ULs (UL target SIR) in a comparison section 105. Specifically, subtraction processing between the measured SIRs and the UL target SIR is performed. That is, differences between the measured SIRs and the target (ideal) SIR are obtained in the comparison section 105.

The subtraction results in the comparison section 105 are fed to a TPC bit generation section 106, where it is judged, based on the subtraction results, whether the measured SIRs are higher or lower than the UL target SIR. Then, the TPC bit denoting the information for transmission power control is generated, based on the judged results. Specifically, a UL-TPC bit for decrease in the transmission power is generated, when the measured SIRs are higher than the UL target SIR; and the above bit for increase in the transmission power is generated, when the measurement ones are lower than the UL target SIR. The above TPC bit is fed to a frame forming section 107.

On the other hand, a DL-TPC bit is extracted from signals demodulated in the demodulating section 103, and the above DL-TPC bit is fed to a transmission power control section 108, which judges the DL-TPC bit. That is, it is judged whether the DL-TPC bit denotes the increase in the transmission power, or the decrease in it. Then, the above DL-TPC bit is added for storage in the transmission power control section 108, which transmits transmission power control signals to a radio transmission section 110 according to the above judgements.

In the frame forming section 107, transmission frames including DL transmission data and the TPC bit information are formed. Transmission signals with the frames formed above are fed to a modulation section 109, and to the radio transmission section 110 after digital modulation at the above modulation section. Moreover, timing for frames in the compressed mode is notified to the frame forming section 107, which forms frames in the compressed mode according to the above timing.

In the radio transmission section 110, predetermined radio transmission processing of the transmission signals after the modulation is performed. In such a time, the transmission power is controlled according to the transmission power control signals transmitted from the transmission power control section 108. The signals after the radio transmission processing are transmitted to communication terminals through the antenna 101 under controlled transmission power.

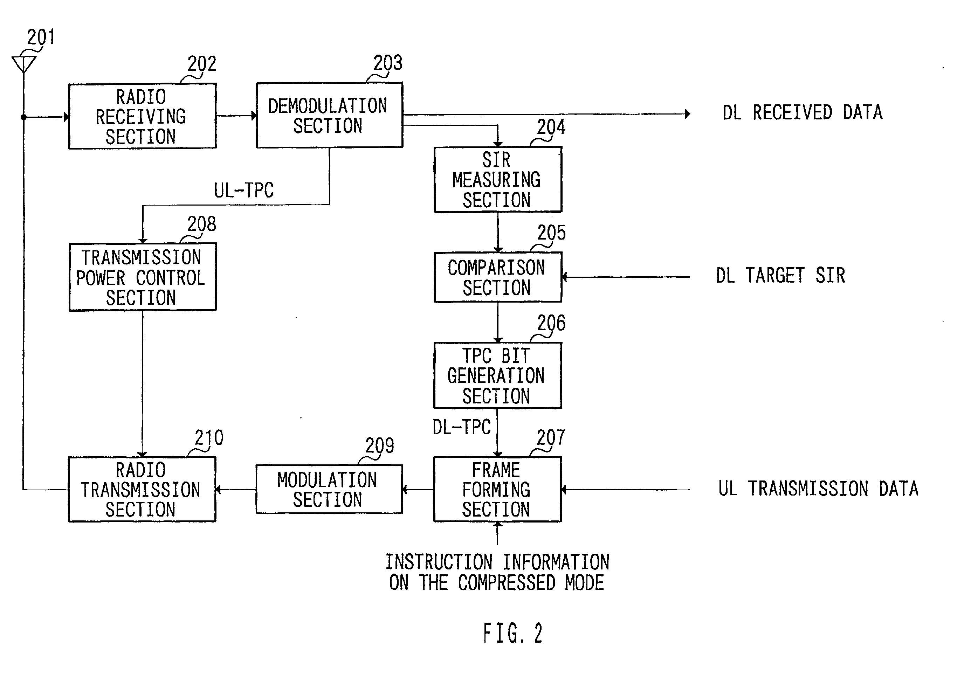

FIG. 2 shows a block diagram of a configuration of a communication terminal according to the embodiment 1 of the present invention. In FIG. 2, predetermined processing, such as frequency conversion, of signals received from the base station device through an antenna 201 is performed in a radio receiving section 202. The received signals after the above predetermined processing are demodulated in a demodulating section 203. The demodulated signals are obtained as DL received data, and fed to an SIR measuring section 204.

The SIRs of the demodulated signals are measured in the SIR measuring section 204. The measured SIRS are compared with the target SIR for DLs (DL target SIR) in a comparison section 205. Specifically, subtraction processing between the measured SIRs and the DL target SIR is performed. That is, the differences between the measured SIRs and the target (ideal) SIR are obtained in the comparison section 205.

The subtraction results in the comparison section 205 are fed to a TPC bit generation section 206, where it is judged, based on the subtraction results, whether measured SIRs are higher or lower than the DL target SIR. Then, a TPC bit denoting the information for transmission power control is generated, based on the judged results. Specifically, the DL-TPC bit for decrease in the transmission power is generated, when the measured SIRs are higher than the DL target SIR; and the above bit for increase in the transmission power is generated, when the measurement ones are lower than the DL target SIR. The above TPC bit is fed to a frame forming section 207.

On the other hand, a UL-TPC bit is extracted from signals demodulated in the demodulating section 203, and fed to a transmission power control section 208, which judges the UL-TPC bit. That is, it is judged whether the UL-TPC bit denotes the increase in the transmission power, or the decrease in it. Then, the above UL-TPC bit is added for storage in the transmission power control section 208, which transmits transmission power control signals to a radio transmission section 210 according to the above judgements.

In the frame forming section 207, transmission frames including UL transmission data and the TPC bit information are formed. Transmission signals with the frames formed above are fed to a modulation section 209, and to the radio transmission section 210 after digital modulation in the above modulation section. Moreover, timing for frames in the compressed mode is notified as instruction information on the compressed mode from the base station device to the frame forming section 207. Thereby, the communication terminal side obtains information on the timing for the start and end of suspension intervals of transmission in the compressed mode.

In the radio transmission section 210, predetermined radio transmission processing of the transmission signals after the modulation is performed. In such a time, the transmission power is controlled according to the transmission power control signals transmitted from the transmission power control section 208. The signals after the radio transmission processing are transmitted to the base station device through the antenna 201 under controlled transmission power control.

Then, there will be described a method for transmission power control, using a base station device and communication terminals, which have a configuration described above. Hereinafter, there will be described a case where an interval of temporal suspension of signal transmission is a suspension interval of transmission in the compressed mode.

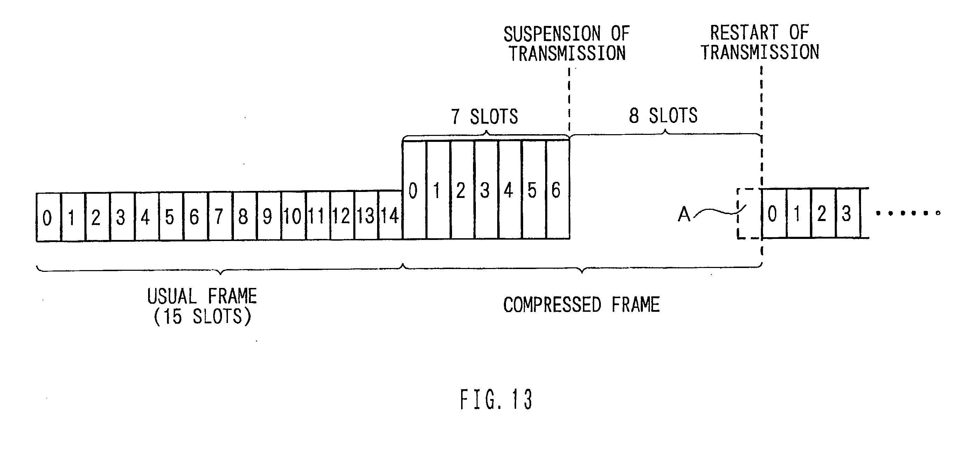

The compressed mode is a mode where time for transmission is compressed in a certain frame to provide an interval of no transmission (an interval for which signal transmission is suspended). As shown in FIG. 13, the time for transmission is compressed into the first seven slots in a frame (with fifteen slots) under the compressed mode. Therefore, the transmission rate is higher than that of a usual frame. The latter eight slots are an interval of no transmission, as the time for transmission is compressed as described above. Other channels may be monitored, using the above interval of no transmission. But, there is no special limitation to the number of slots, though the latter eight slots in the frame are configured to be an interval of no transmission in the present embodiment.

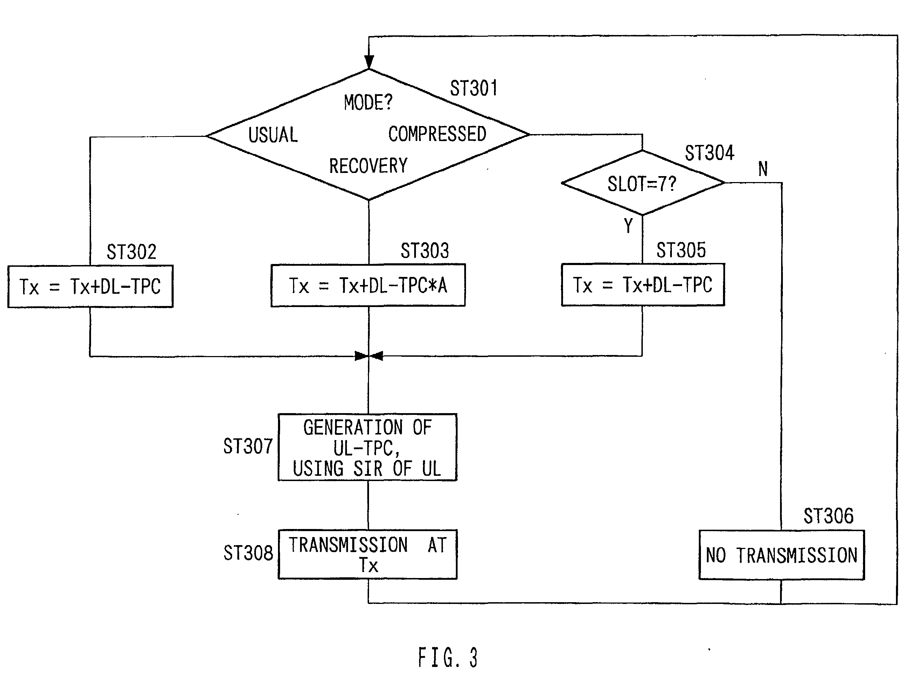

FIG. 3 shows a flow chart of a method for transmission power control in the base station device according to the embodiment 1 of the present invention. At step (Hereinafter, abbreviated as ST) 301, it is judged whether a transmission mode is a usual one, a compressed one, or a recovery one just after the compressed mode. Here, the above judgment may be easily performed, as the timing of the compressed mode is previously known to the base station device side.

When the transmission mode is the usual one, the DL-TPC bit is extracted from the received signals for transmission power control according to the above DL-TPC bit. That is, DL transmission power Tx is obtained by addition of DL-TPC (1dB, or -1dB) to the DL transmission power Tx at the previous transmission (ST 302). And, a UL-TPC bit is generated, using the SIRs of the received signals from communication terminals (ST 307). Then, the transmission is performed at the DL transmission power Tx obtained at ST 302 (ST 308).

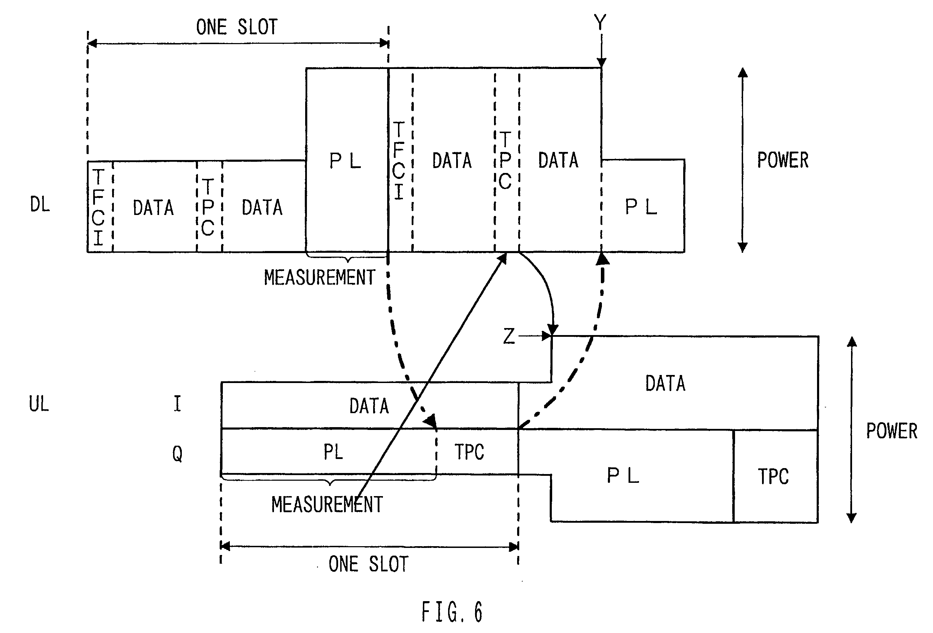

The transmission power control for the above usual mode is performed as shown in FIG. 6. That is, SIRs are measured in communication terminals, using known signals in one slot on the DL, for example, pilot signals (PLs); and a TPC bit is generated from the measured results, and carried on the UL for transmission (an alternate long and short dash line with an arrow). Now, as IQ multiplexing of the UL is performed, the TPC bit is transmitted on the Q channel. Then, the above TPC bit is reflected in the base station device side. Timing reflecting the TPC bit is at a time of a Y point for the DL in FIG. 6. Therefore, the timing for slots is not the same with the one reflecting the TPC bit.

In the first place, it is judged (ST 304) whether the transmission slots are shorter than seven slots, when the transmission mode is the compressed mode. That is, it is judged whether the above slots are in an interval of transmission or the one of no transmission. In the present embodiment, it is judged whether the transmission slots are shorter than seven slots, as the first seven slots in the compressed mode are in the interval of transmission, and the latter eight slots in the interval of no transmission, as shown in FIG. 13.

When the transmission slots are shorter than seven slots, the DL-TPC bit is extracted from the received signals, and the transmission power control is performed according to the above DL-TPC bit. That is, DL transmission power Tx is obtained by addition of DL-TPC (1dB, or -1dB) to the DL transmission power Tx at the previous transmission (ST 305). And, a UL-TPC bit is generated, using the SIRs of the received signals from communication terminals (ST 307). Then, the transmission is performed at the DL transmission power Tx obtained at ST 305 (ST 308). On the other hand, when the transmission slots are longer than seven slots, that is, in case of the interval of no transmission, transmission is not performed (ST 306).

When the transmission mode is a recovery mode just after the compressed mode, transmission power control is performed so that the transmission power values are converged to the ideal value. Specifically, the DL-TPC bit is extracted from the received signals, and transmission power control is performed according to the DL-TPC bit. That is, DL transmission power Tx is obtained by addition of DL-TPC*A to the DL transmission power Tx at the previous transmission (ST 303). And, a UL-TPC bit is generated, using the SIRs of the received signals from communication terminals (ST 307). Then, the transmission is performed at the DL transmission power Tx obtained at ST 305 (ST 308).

There are no special limitations in methods for convergence to the ideal transmission power value at recovery of the compressed mode, and various kinds of methods may be applied. For the above convergence, a usual step width for the transmission power control may be 1dB; the step width may be set exceeding 1dB; or the step width may be changed by adaptive control. That is, DL-TPC*A may be equal to ±1dB; larger than +1dB, or smaller than -1dB; or equal to an adapted value.

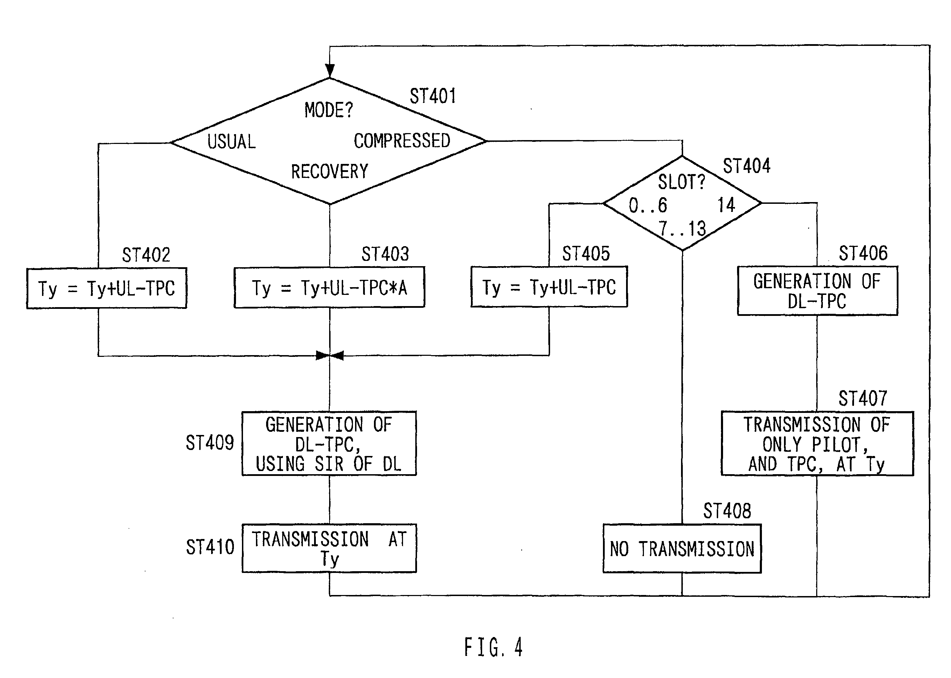

FIG. 4 shows a flow chart of a method for transmission power control in a communication terminal according to the embodiment 1 of the present invention. At ST 401, it is judged whether a transmission mode is a usual one, a compressed one, or a recovery one just after the compressed mode. Here, the above judgment may be easily performed, as the timing of the compressed mode is previously notified from the base station device.

When the transmission mode is the usual mode, the UL-TPC bit is extracted from the received signals for transmission power control according to the UL-TPC bit. That is, UL transmission power Ty is obtained by addition of UL-TPC (1dB, or -1dB) to the UL transmission power Ty at the previous transmission (ST 402). And, an DL-TPC bit is generated, using the SIRs of the received signals from the base station device (ST 409). Then, the transmission is performed at the UL transmission power Ty obtained at ST 402 (ST 410).

The transmission power control for the above usual mode is performed as shown in FIG. 6. That is, SIRs are measured in communication terminals, using known signals, for example, pilot signals (PLs) in one slot on the Q channel of the UL; and a TPC bit is generated from the measured results and carried on the DL for transmission (a solid line with an arrow). The above TPC bit is reflected in the communication terminal sides. Timing reflecting the TPC bit is at a time of a Z point for the UL in FIG. 6. Therefore, the timing for slots is not the same with the one reflecting the TPC bit.

In the first place, it is judged (ST 404) in which group the transmission slots are included, when the transmission mode is the compressed mode. That is, it is judged whether the above slots are in an interval of transmission, the one of no transmission, or the last slot (one slot just before the restart of transmission). Then, it is judged, in the present embodiment, whether the transmission slots are slots between &0 slot and &6 slot, between &7 slot and &13 slot, or &14 slot (A in FIG. 13), as the first seven slots in the compressed mode are in the interval of transmission, and the latter eight slots in the interval of no transmission, as shown in FIG. 13.

When the transmission slots are slots between #0 slot and #6 slot, the UL-TPC bit is extracted from the received signals, and transmission power control is performed according to the UL-TPC bit. That is, UL transmission power Ty is obtained by addition of UL-TPC (1dB, or -1dB) to the UL transmission power Ty at the previous transmission (ST 405). And, a DL-TPC bit is generated, using the SIRs of the received signals from the base station device (ST 409). Then, the transmission is performed at the UL transmission power Ty obtained at ST 405 (ST 410). When the transmission slots are slots between #7 slot and #13 slot, that is, in case of the interval of no transmission, transmission is not performed (ST 408).

When the transmission slot is the #14 slot, a DL-TPC bit is generated (ST 406). There is no special limitation to the above method for generation of the DL-TPC bit. The channel quality of the DLs is measured by a certain method, and the DL-TPC bit is generated based on the measured results. And, known signals, that is, PL; and control signals for compensation of errors, which are deviations from the desired (ideal) transmission power value, that is, the DL-TPC bit is transmitted at the UL transmission power Ty (ST 407). At the above time, only the PL and the DL-TPC bit is transmitted. Thereby, the ratio of the TPC bit in the transmission signal is higher than that of usual data transmission, and the transmission rate of the TPC bit is increased. Therefore, the TPC bit may be more exactly transmitted to the base station device with less errors, and, then, transmission power control may be reliably performed in the base station device.

And, as the transmission signals are configured repeatedly to include information for transmission power control, in case of an increased transmission rate, to transmit the above information in a state unaffected by errors, the above information may be exactly received in the base station device.

Moreover, as the above information for transmission power control is configured to include information on step widths, in case of an increased transmission rate, and more amount of signals (number of bits) than that of usual cases may be allotted to the information for transmission power control, information on number of control steps in the transmission power control may be carried. Thereby, transmission power values may be quickly converged into the ideal value by dynamic transmission power control in the recovery mode from restart of transmission.

The transmission power control may be previously performed at restart of transmission, using the above DL-TPC bit. Time for convergence of the transmission power into the ideal value may be reduced by previous transmission power control at restart of transmission as described above. That is, compensation amount for deviations from the ideal value may be reduced, as the compensation may be previously performed by previous transmission power control before restart of transmission. Thereby, signal quality of user sides may be quickly improved, or interference with signals of other users may be reduced.

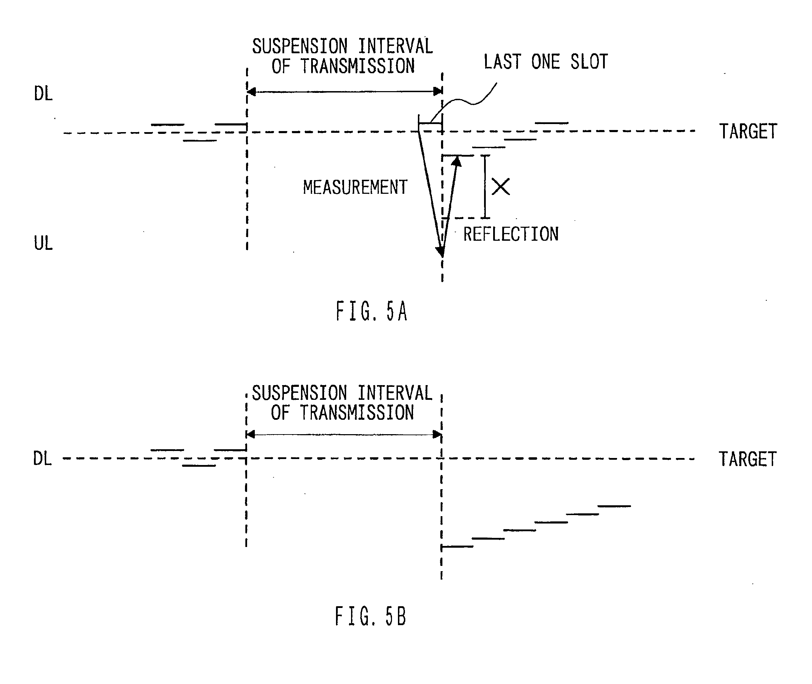

As only the PL and the DL-TPC bit are transmitted in the slots on the UL just before restart of transmission, a lot of TPC bits may be secured. Thereby, the transmission power may be quickly converged into the ideal value, as the previous compensation amount may be increased even if the transmission power value remarkably deviates from the ideal value. That is, as the previous compensation amount (X) may be remarkably increased as shown in FIG. 5A, the transmission power may be more quickly converged into the ideal value, compared with the case shown in FIG. 5B.

Moreover, the SIRs of the UL may be measured, as some data, for example, the PL and the TPC bit are transmitted in the slots on the UL just before restart of transmission. Therefore, the DL-TPC bit just after restart of transmission, which have not been usually used in the compressed mode, may be effectively used. Thereby, effective transmission power control of the UL may be performed just after restart of transmission.

Further, data quality may be improved at demodulation of data in the base station device, as the PL is transmitted on the UL in the slots just before restart of transmission. That is, the quality at demodulation of data may be improved, as the number of PLs is increased in case of demodulation of data using PL over a plurality of frames.

### (Embodiment 2)

In the present embodiment, there will be described a case, where known signals are transmitted from a base station device to communication terminals in the slot just before restart of transmission; information for transmission power control is obtained based on the quality of the above known signals for transmission from the communication terminals to the base station device; and transmission power control is performed so as to compensate differences between the signal quality of the DL and the desired quality of the DL, based on the above information for transmission power control.

As a base station device and communication terminals in the present embodiment have the same configuration with those of the embodiment 1, the description will be eliminated.

A method for transmission power control using the base station device and the communication terminals according to the present embodiment will be described. Now, there will be described a case where an interval of temporal suspension of signal transmission is an interval of signal suspension in the compressed mode.

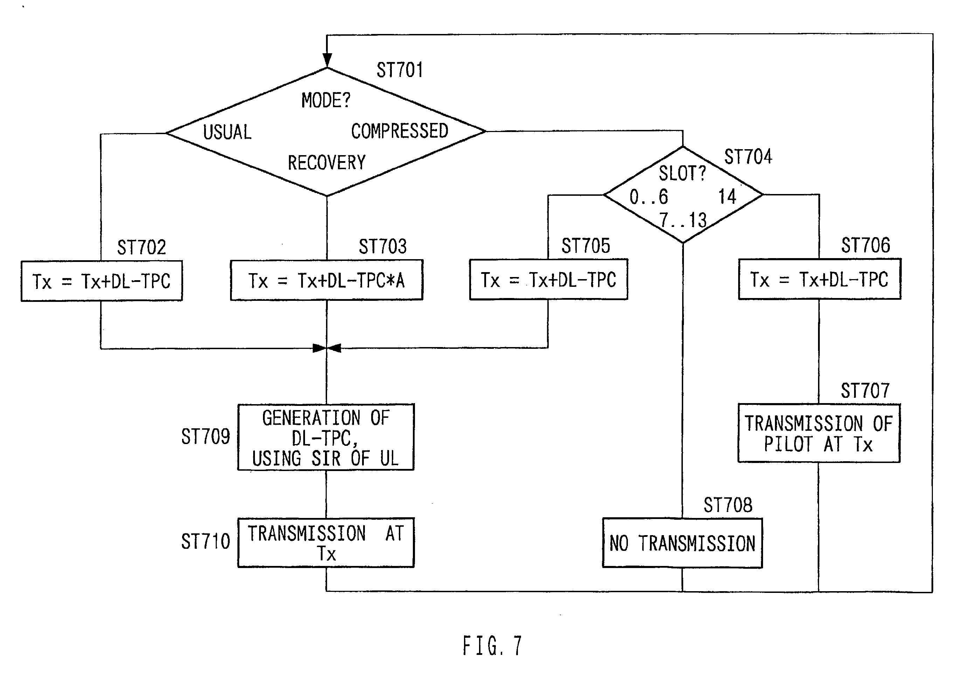

FIG. 7 shows a flow chart of a method for transmission power control in the base station device according to the embodiment 2 of the present invention. At ST 701, it is judged whether a transmission mode is a usual one, a compressed one, or a recovery one just after the compressed mode. Here, the above judgment may be easily performed, as the timing of the compressed mode is previously known to the base station device.

When the transmission mode is the usual mode, the DL-TPC bit is extracted from the received signals for transmission power control according to the above DL-TPC bit. That is, DL transmission power Tx is obtained by addition of DL-TPC (1dB, or -1dB) to the DL transmission power Tx at the previous transmission (ST 702). And, a UL-TPC bit is generated, using the SIRS of the received signals from communication terminals (ST 709). Then, the transmission is performed at transmission power Tx obtained at ST 302 (ST 710).

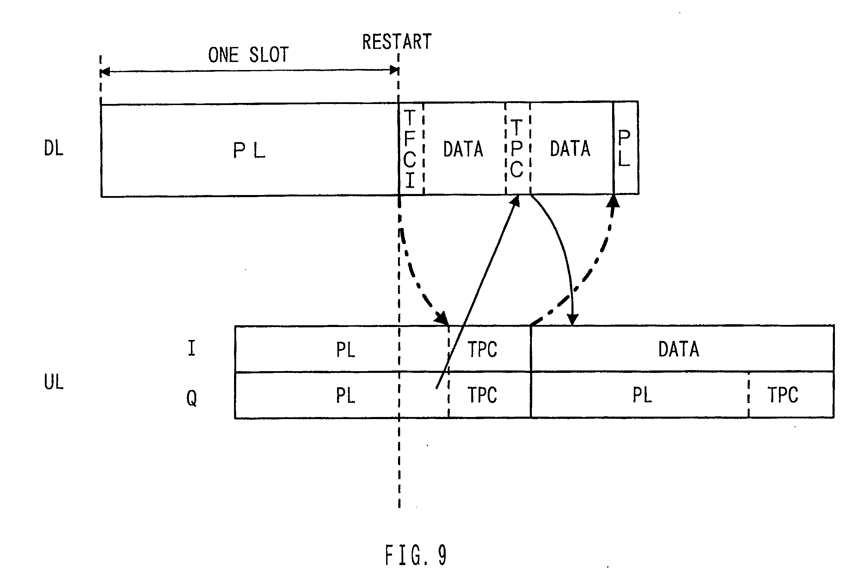

The transmission power control for the above usual mode is performed as shown in FIG. 9. That is, SIRs are measured in communication terminals, using only known signals, for example, pilot signals (PLs) in one slot on the DL; and a TPC bit is generated from the measured results; and carried on the UL for transmission (an alternate long and short dash line with an arrow). Now, as IQ multiplexing of the UL is performed, the TPC bit is transmitted on the Q channel. The above TPC bit is reflected in the base station side. Here, the timing for slots is not the same with the one reflecting the TPC bit.

In the first place, it is judged (ST 704) in which group the transmission slots are included, when the transmission mode is the compressed mode. That is, it is judged whether the above slots are in an interval of transmission, the one of no transmission, or the last slot (one slot just before restart of transmission). Then, it is judged, in the present embodiment, whether the transmission slots are slots between &0 slot and &6 slot, between &7 slot and &13 slot, or &14 slot (A in FIG. 13), as the first seven slots in the compressed mode are in the interval of transmission, and the latter eight slots in the interval of no transmission, as shown in FIG. 13.

When the transmission slots are slots between #0 slot and #6 slot, the DL-TPC bit is extracted from the received signals, and the transmission power control is performed according to the DL-TPC bit. That is, DL transmission power Tx is obtained by addition of DL-TPC (1dB, or -1dB) to the DL transmission power Tx at the previous transmission (ST 705). And, a UL-TPC bit is generated, using the SIRs of the received signals from the base station device (ST 709). Then, the transmission is performed at the DL transmission power Tx obtained at ST 705 (ST 710). When the transmission slots are slots between #7 slot and #13 slot, that is, in case of the interval of no transmission, transmission is not performed (ST 708).

When the transmission slot is the #14 slot, transmission power control is performed according to the DL-TPC bit. That is, DL transmission power Tx is obtained by addition of DL-TPC (1dB, or -1dB) to the DL transmission power Tx at transmission just before suspension of transmission (ST 706). Then, only the known signals, that is, the PLs are transmitted at the transmission power obtained at ST 706 (ST 707).

When the transmission mode is a recovery mode just after the compressed mode, transmission power control is performed so that the transmission power values are converged to the ideal value. Specifically, the DL-TPC bit is extracted from the received signals, and transmission power control is performed according to the above DL-TPC bit. That is, DL transmission power Tx is obtained by addition of DL-TPC*A to the DL transmission power Tx at the previous transmission (ST 703). And, a UL-TPC bit is generated, using the SIRS of the received signals from the base station device (ST 709). Then, the transmission is performed at the DL transmission power Tx obtained at ST 705 (ST 710).

There are no special limitations in methods for convergence to the ideal transmission power value at recovery of the compressed mode, and various kinds of methods may be applied. For the above convergence, a usual step width for the transmission power control may be 1dB; the step width for the above control may be set exceeding 1dB; or the step width for the above control may be changed by adaptive control. That is, DL-TPC*A may be equal to +1dB; larger than +1dB, or smaller than -1dB; or equal to an adapted value.

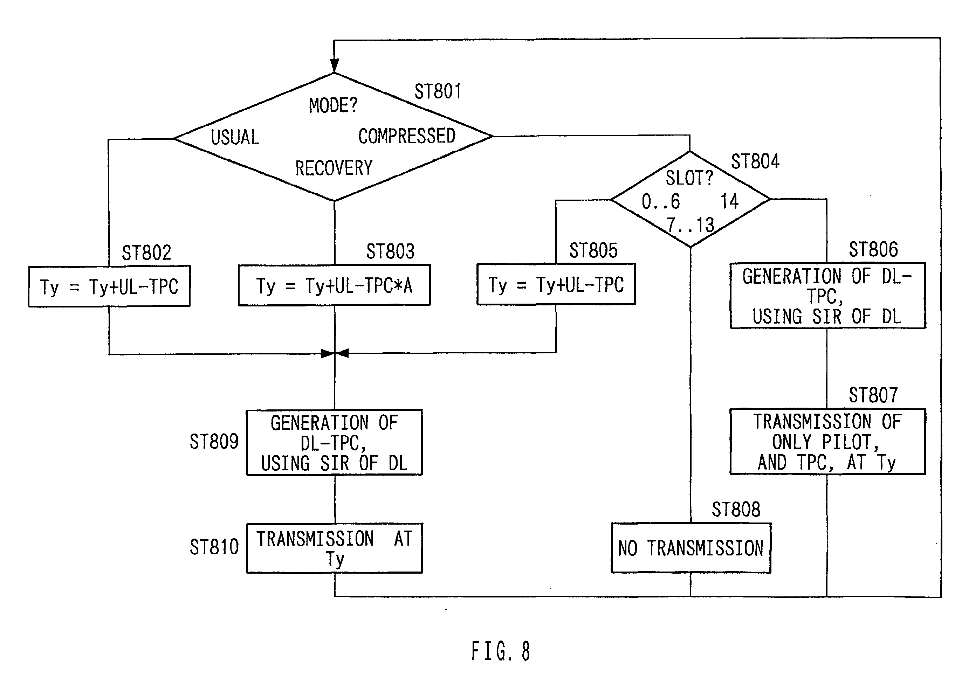

FIG. 8 shows a flow chart of a method for transmission power control in communication terminals according to the embodiment 2 of the present invention. At ST 801, it is judged whether a transmission mode is a usual one, a compressed one, or a recovery one just after the compressed mode. Here, the above judgment may be easily performed, as the timing of the compressed mode is previously notified from the base station device.

When the transmission mode is the usual mode, the UL-TPC bit is extracted from the received signals for transmission power control according to the UL-TPC bit. That is, UL transmission power Ty is obtained by addition of UL-TPC (1dB, or -1dB) to the UL transmission power Ty at the previous transmission (ST 802). And, a DL-TPC bit is generated, using the SIRs of the received signals from the base station device (ST 809). Then, the transmission is performed at the transmission power Ty obtained at ST 402 (ST 810).

The transmission power control for the above usual mode is performed as shown in FIG. 9. That is, SIRs are measured in communication terminals, using known signals, for example, pilot signals (PLs) in one slot on the Q channel of the UL; and a TPC bit is generated from the measured results; and carried on the DL for transmission (a solid line with an arrow). The above TPC bit is reflected in the communication terminal sides. Therefore, the timing for slots is not the same with the one reflecting the TPC bit.

In the first place, it is judged (ST 804) in which group the transmission slots are included, when the transmission mode is the compressed mode. That is, it is judged whether the above slots are in an interval of transmission, the one of no transmission, or the last slot (one slot just before the restart of transmission). Then, it is judged, in the present embodiment, whether the transmission slots are slots between &0 slot and &6 slot, between &7 slot and &13 slot, or &14 slot (A in FIG. 13), as the first seven slots in the compressed mode are in the interval of transmission, and the latter eight slots in the interval of no transmission, as shown in FIG. 13.

When the transmission slots are slots between #0 slot and #6 slot, the UL-TPC bit is extracted from the received signals, and transmission power control is performed according to the UL-TPC bit. That is, UL transmission power Ty is obtained by addition of UL-TPC (1dB, or -1dB) to the UL transmission power Ty at the previous transmission (ST 805). And, a DL-TPC bit are generated, using the SIRs of the received signals from the base station device (ST 809). Then, the transmission is performed at the UL transmission power Ty obtained at ST 405 (ST 810). When the transmission slots are slots between #7 slot and #13 slot, that is, in case of the interval of no transmission, transmission is not performed (ST 808).

When the transmission slot is the #14 slot, a DL-TPC bit is generated (ST 806), based on SIRs obtained from the known signals transmitted on one slot just before restart of transmission from the base station device. And, only the known signals, that is, PL; and control signals for compensation of errors, which are deviations from the desired (ideal) transmission power value, that is, the DL-TPC bit is transmitted at the UL transmission power Ty (ST 807). Thereby, the ratio of the TPC bit in the transmission signals is higher than that of usual data transmission, and the transmission rate of the TPC bit is increased. Therefore, the TPC bit may be more exactly transmitted to the base station device with less errors, and, then, transmission power control may be reliably performed in the base station device.

Transmission power control may be previously performed at restart of transmission, using the above DL-TPC bit. Time for convergence of the transmission power into the ideal value may be reduced by previous transmission power control at restart of transmission as described above. That is, compensation amount for deviations from the ideal value may also be reduced in the present embodiment, as the compensation may be previously performed by previous transmission power control before restart of transmission. Thereby, signal quality of user sides may be quickly improved, or interference with signals of other users may be reduced.

### (Embodiment 3)

In the present embodiment, there will be described a case, where transmission power control, so as to compensate differences between the signal quality of the DL and the desired quality of the DL, is performed, based on the above information for transmission power control, using the transmission power ratio between known signals obtained from a channel common to all the users, for example, known signals on the common pilot channel; and known signals, for example, pilot signals, on dedicated physical channels in the compressed mode.

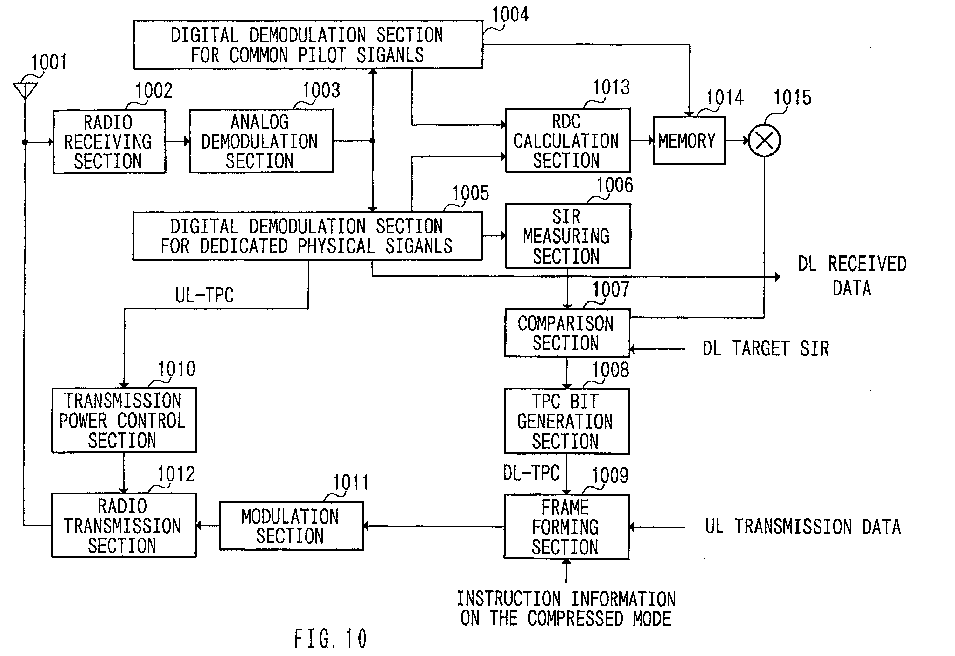

As a base station device in the present embodiment has the same configuration with that of the embodiment 1, the description will be eliminated. A configuration of a communication terminal according to the present embodiment will be described, referring to FIG. 10.

In FIG. 10, predetermined processing, such as frequency conversion, of signals received from the base station device through an antenna 1001 is performed in a radio receiving section 1002. The received signals after the above predetermined processing are demodulated in an analog demodulating section 1003. The signals after analog demodulation are fed to a digital demodulation section for the common pilot channel 1004, and the one for dedicated physical channels 1005, where digital demodulation is performed for each channels.

Each signal after digital demodulation is obtained as DL received signals, and, at the same time, is fed to a RDC (power ratio of dedicated data and common pilot) calculation section 1013, where the transmission power ratio between the above two demodulated digital signals is calculated. The above transmission power ratio is stored in a memory 1014.

In a multiplication section 1015, the above transmission power ratio is properly, for example, in the slots different from those, in which transmission power ratios are measured, multiplexed by the transmission power of the signals after digital demodulation in the digital demodulation section for the common pilot 1014. Thereby, the current transmission power of dedicated physical signals may be obtained. The information on the transmission power of the above dedicated physical signals is fed to an SIR measuring section 1006.

On the other hand, the signals after digital demodulation in the digital demodulation section for dedicated physical signals 1005 are fed to the SIR measuring section 1006, where SIRs are measured from the signals after digital demodulation. The measured SIRs are compared with the DL target SIR in a comparison section 1007. Specifically, subtraction processing is performed between the above measured SIRs and the DL target SIR. That is, the differences between the measured SIRs and the target (ideal) SIR are obtained in the comparison section 1007.

The subtraction results in the comparison section 1007 are fed to a TPC bit generation section 1008, where it is judged, based on the subtraction results, whether measured SIRs are higher or lower than the DL target SIR. Then, a TPC bit denoting information on transmission power control is generated, based on the above judged results. Specifically, a DL-TPC bit for decrease in the transmission power is generated, when the measured SIRs are higher than the DL target SIR; and the above bits for increase in the transmission power are generated, when the measured ones are lower than the DL target SIR. The above TPC bit is fed to a frame forming section 1009.

On the other hand, a UL-TPC bit is extracted from signals demodulated in the digital demodulating section for dedicated physical signals 1005, and fed to a transmission power control section 1010, which judges the UL-TPC bit. That is, it is judged whether the UL-TPC bit denotes the increase in the transmission power, or the decrease in it. Then, the above UL-TPC bit is added for storage in the transmission power control section 1010, which transmits transmission power control signals to a radio transmission section 1012 according to the above judgements.

In the frame forming section 1009, transmission frames including UL transmission data and the TPC bit information are formed. Transmission signals with the frames formed above are fed to a modulation section 1011, and to the radio transmission section 1012 after digital modulation in the above section 1011. Moreover, timing for frames in the compressed mode is notified as instruction information on the compressed mode from the base station device to the frame forming section 1009. Thereby, the communication terminal side obtains information on the timing for the start and end of suspension intervals of transmission in the compressed mode.

In the radio transmission section 1012, predetermined radio transmission processing of the transmission signals after the modulation is performed. In such a time, transmission power is controlled according to the transmission power control signals transmitted from the transmission power control section 1010. The signals after the radio transmission processing are transmitted to the base station device through the antenna 1001 under controlled transmission power control.

A method for transmission power control using the base station device and the communication terminals according to the present embodiment will be described. Now, there will be described a case where a temporal suspension interval of signal transmission is a suspension interval of transmission in the compressed mode.

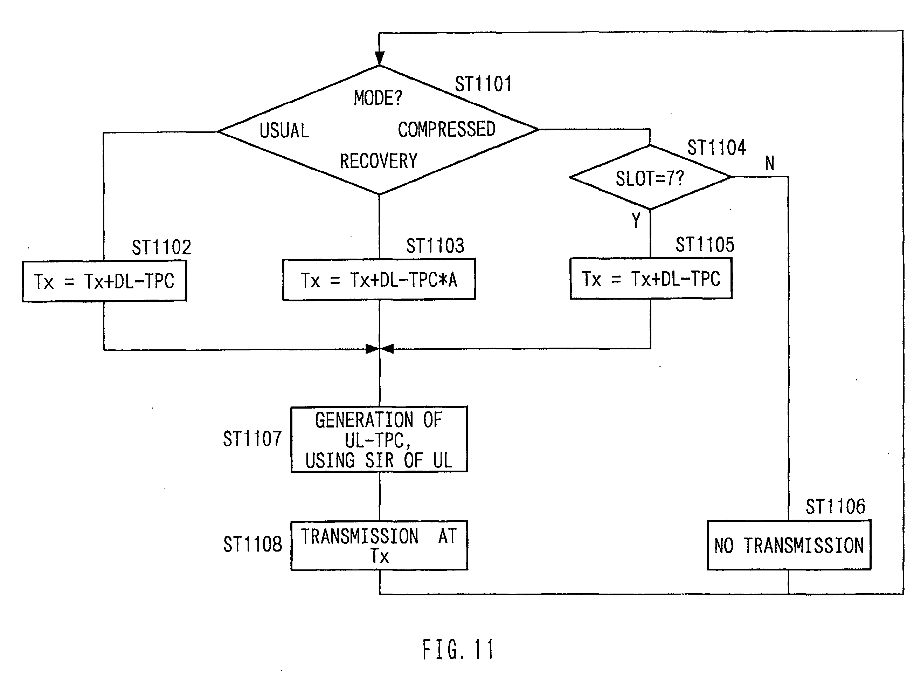

FIG. 11 shows a flow chart of a method for transmission power control in the base station device according to the embodiment 3 of the present invention. At ST 1101, it is judged whether a transmission mode is a usual one, a compressed one, or a recovery one just after the compressed mode. Here, the above judgment may be easily performed, as the timing of the compressed mode is previously known to the base station device.

When the transmission mode is the usual mode, a DL-TPC bit is extracted from the received signals, and transmission power control is performed according to the above DL-TPC bit. That is, DL transmission power Tx is obtained by addition of DL-TPC (1dB, or -1dB) to the DL transmission power Tx at the previous transmission (ST 1102). And, a UL-TPC bit is generated, using the SIRS of the received signals from communication terminals (ST 1107). Then, the transmission is performed at the DL transmission power Tx obtained at ST 1102 (ST 1108).

In the first place, it is judged whether the transmission slots are shorter than seven slots (ST 1104), when the transmission mode is in the compressed mode. That is, it is judged whether the slots are in the interval of transmission, or that of no transmission. Then, it is judged, in the present embodiment, whether the transmission slots are shorter than seven slots, as the first seven slots in the compressed mode are in the interval of transmission, and the latter eight slots in that of no transmission, as shown in FIG. 13.

When the transmission slots are shorter than seven slots, a DL-TPC bit is extracted from the received signals, and transmission power control is performed according to the above DL-TPC bit. That is, DL transmission power Tx is obtained by addition of DL-TPC (1dB, or -1dB) to the DL transmission power Tx at the previous transmission (ST 1105). And, a UL-TPC bit is generated, using the SIRs of the received signals from communication terminals (ST 1107). Then, the transmission is performed at the DL transmission power Tx obtained at ST 1105 (ST 1108). On the other hand, when the transmission slots are longer than seven slots, that is, in case of the interval of no transmission, transmission is not performed (ST 1106).

When the transmission mode is a recovery mode just after the compressed mode, transmission power control is performed so that the transmission power values are converged to the ideal value. Specifically, a DL-TPC bit is extracted from the received signals, and transmission power control is performed according to the above DL-TPC bit. That is, DL transmission power Tx is obtained by addition of DL-TPC*A to the DL transmission power Tx at the previous transmission (ST 1103). And, a UL-TPC bit is generated, using the SIRs of the received signals from the communication terminals (ST 1108). Then, the transmission is performed at the DL transmission power Tx obtained at ST 1103 (ST 1109).

There are no special limitations in methods for convergence to the ideal transmission power value at recovery of the compressed mode, and various kinds of methods may be applied. For the above convergence, a usual step width for the transmission power control may be 1dB; the step width for the above control may be set exceeding 1dB; or the step width for the above control may be changed by adaptive control. That is, DL-TPC*A may be equal to ±1dB; larger than +1dB, or smaller than -1dB; or equal to an adapted value.

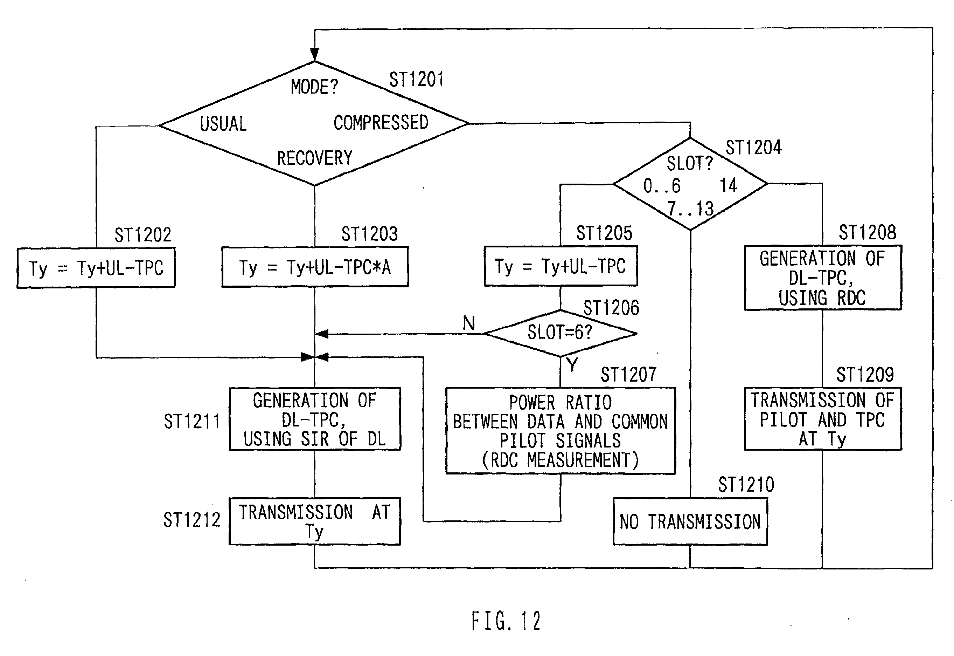

FIG. 12 shows a flow chart of a method for transmission power control in a communication terminal according to the embodiment 3 of the present invention. At ST 1201, it is judged whether a transmission mode is a usual one, a compressed one, or a recovery one just after the compressed mode. Here, the above judgment may be easily performed, as the timing of the compressed mode is previously notified from the base station device.

When the transmission mode is the usual mode, a UL-TPC bit is extracted from the received signals, and transmission power control is performed according to the UL-TPC bit. That is, UL transmission power Ty is obtained by addition of UL-TPC (1dB, or -1dB) to the UL transmission power Ty at the previous transmission (ST 1202). And, a DL-TPC bit is generated, using the SIRs of the received signals from the base station device (ST 1211). Then, the transmission is performed at the UL transmission power Ty obtained at ST 1202 (ST 1212).

In the first place, it is judged (ST 1204) in which group the transmission slots are included, when the transmission mode is the compressed mode. That is, it is judged whether the above slots are in an interval of transmission, the one of no transmission, or the last slot (one slot just before restart of transmission). Then, it is judged, in the present embodiment, whether the transmission slots are slots between &0 slot and &6 slot, between &7 slot and &13 slot, or &14 slot (A in FIG. 13), as the first seven slots in the compressed mode are in the interval of transmission, and the latter eight slots in the interval of no transmission, as shown in FIG. 13.

When the transmission slots are slots between #0 slot and #6 slot, a UL-TPC bit is extracted from the received signals, and transmission power control is performed according to the UL-TPC bit. That is, UL transmission power Ty is obtained by addition of UL-TPC (1dB, or -1dB) to the UL transmission power Ty at the previous transmission (ST 1205).

Then, it is judged whether the slot is #6 slots (ST 1206). That is, it is judged whether the slot is a slot just after suspension of signal transmission. The reason is that the transmission power ratio (RDC) may be obtained between two known signals, as the #6 slot is a slot just before suspension of signal transmission, and the known signals for the common channel and those of dedicated physical channels are transmitted together.

If the slot is not #6 slot, a DL-TPC bit is generated, using SIRS of the received signals from the base station device (ST 1211). Then, the transmission is performed at the transmission power Ty obtained at ST 1202 (ST 1212).

On the other hand, if the slot is #6 slot, an RDC is calculated (ST 1207), using known signals on the common control channel, and those on dedicated physical channels in the above #6 slot. SIRs of the received signals from the base station device are obtained, and a DL-TPC bit is generated (ST 1211). Then, the transmission is performed at the transmission power Ty obtained at ST 1202 (ST 1212).

When the transmission slot is a slot between #7 slot and #13 slot at ST 1204, transmission is not performed (ST 1210). And, when the transmission slot is #14 slot at ST 1204, a DL-TPC bit is generated, using obtained RDC (ST 1208). And, only the DL-TPC bit and the PL obtained at ST 1208 are transmitted at the UL transmission power Ty (ST 1209). Thereby, the ratio of the TPC bit in the transmission signals is higher than that of usual data transmission, and the transmission rate of the TPC bit is increased. Therefore, the TPC bit may be more exactly transmitted to the base station device with less errors, and, then, transmission power control may be reliably performed in the base station device.

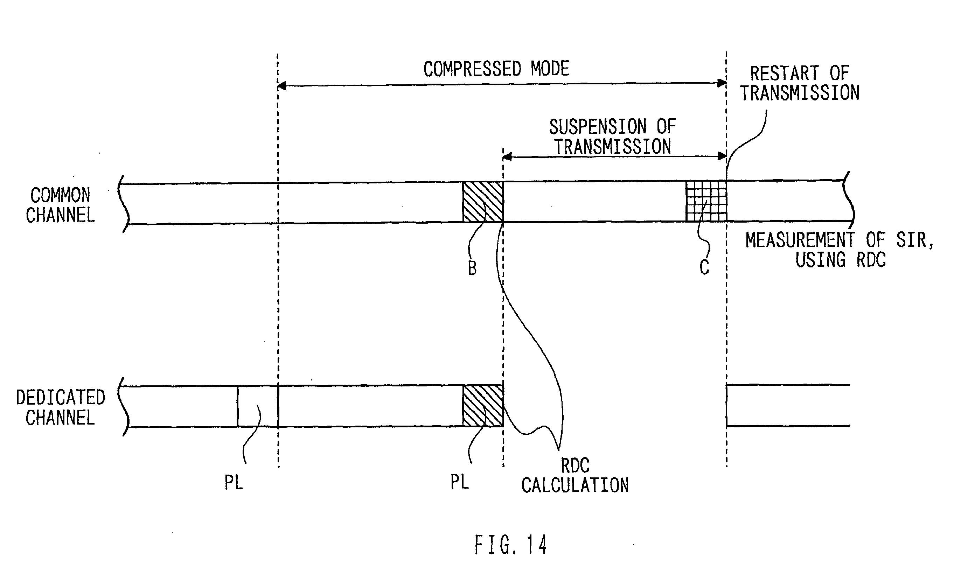

In the first place, a transmission power ratio (RDC) between known signals on the common control channel and those on a dedicated physical channel is required to be obtained in a slot (a B section (the hatched area) in FIG. 14) just before suspension of transmission, when information for transmission power control (TPC bit) is required to be obtained from RDC. Then, transmission power (D) of known signals in a slot (a C section (the meshed section) in FIG. 14) just before restart of transmission on the common control channel is required to be obtained. Transmission power (E) of signals on a dedicated physical channel just before restart of transmission is required to be obtained from the RDC and the transmission power (D). SIRS are measured, using the above transmission power (E) , and a TPC bit is generated based on the above SIRs.

Transmission power control is previously performed at restart of transmission, using the above DL-TPC bit. Time for convergence of transmission power into the ideal value may be reduced by previous transmission power control at restart of transmission as described above. That is, compensation amount for deviations from the ideal value may be reduced, in the present embodiment, as the compensation may be previously performed by previous transmission power control before restart of transmission. Thereby, signal quality of user sides may be quickly improved, or interference with signals of other users may be reduced.

In the present embodiment, information for transmission power control of a dedicated physical channel under suspension of transmission is obtained, using transmission power ratios and common known signals, which are constantly transmitted; and the above information for transmission power control is transmitted to the base station device side. Therefore, transmission power control may be previously performed at restart of transmission, even without transmission of known signals from the base station device side during a suspension interval of transmission, and, then, time for convergence of the transmission power into the ideal value may be reduced.

In the present embodiment, transmission power control may be performed, considering a DL-TPC bit before suspension of transmission in the base station device side, that is, using integrating values of DL-TPC bits till just before suspension of transmission, and the DL-TPC bit obtained from the RDC in communication terminal sides. Moreover, transmission power control may be performed in the communication terminal sides, using only the DL-TPC bit obtained from the RDC, without use of a DL-TPC bit before suspension of transmission, that is, without consideration of integrating values of the DL-TPC bits till just before suspension of transmission in the base station device side. Accurate transmission power control may be performed, as the above DL-TPC bit obtained from the RDC in the communication terminal sides are information for the most recent slot.

### (Embodiment 4)

Though cases where both ULs and DLs adopt the compressed mode, that is, cases, where any of a base station device and communication terminals support the control according to the present invention, have been described in the above embodiments 1-3, there may be assumed to be cases where the base station device and/or communication terminal do not support the above control. Hereinafter, cases, where a base station device and/or a communication terminal do/does not support the control according to the present invention, will be described as embodiments.

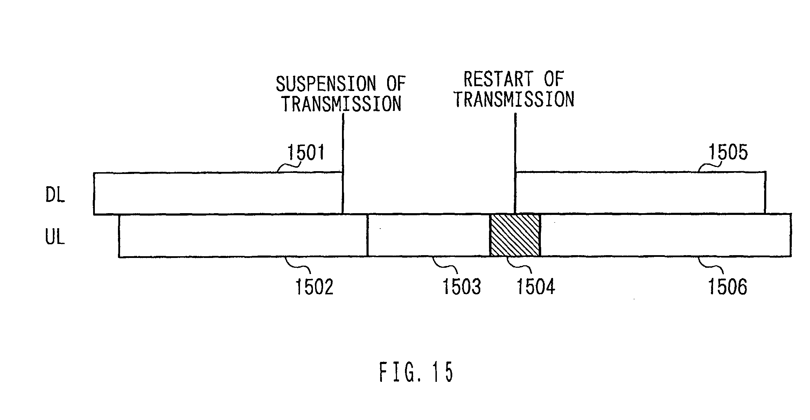

FIG. 15 shows an explanatory view of transmission in the compressed mode according to the present embodiment.

As shown in FIG. 15, the compressed mode is adopted for DLs, and a suspension interval of transmission is provided between transmission signals 1501 and those 1505. On the other hand, the compressed mode is not adopted for ULs, and transmission is continuously performed. That is, transmission signals 1502, 1503, 1504, and 1506 are continuously transmitted on the ULs.

Transmission power control is performed by the closed loop according to TPC bits for the transmission signals 1501, and 1502, on the DL, and those 1505, and 1506 on the UL. However, known signals (pilot signals) are not fed to communication terminals as a necessary consequence, as there are no transmission signals on the DL during the suspension interval of transmission on the DL in the compressed mode. Therefore, the TPC bits included in the transmission signals 1503 on the UL become unreliable, as the communication terminal cannot measure SIRs based on the known signals.

Accordingly, SIRs are measured by communication terminals, using the common control channel signals of the slot just before restart of transmission on the DL in the compressed mode, and a DL-TPC bit is generated, based on the above measured results, in the present embodiment, similarly to the above embodiments. The above DL-TPC bit is transmitted on the transmission signals 1504 of the UL.

The above DL-TPC bit is reliable, as it is obtained by measurement of SIRS from signals on the common control channel of the DL. Therefore, accurate transmission power control may be realized in the base station device from a point of restart of transmission by transmission power control according to the transmitted DL-TPC bit on the transmission signals 1504. As described above, time for convergence of transmission power into the ideal value may be reduced, similarly to the above embodiment, by previous transmission power control at restart of transmission, even when the base station device does not support the control according to the present invention.

### (Embodiment 5)

In the present embodiment, there will be described a case where the compressed mode is applied to both the ULs and DLs; a base station device supports the control according to the present invention; and it is not definitely known that communication terminals support the above control. In the above case, it is judged, by judgement of the presence of UL signals including the DL-TPC bit generated using DL signals just before restart of transmission in the compressed mode, whether the communication terminal supports the above control.

When the compressed mode is applied for both the ULs and DLs, both ULs and DLs have a suspension interval of transmission. It may be possible to judge by detecting the presence of the UL signals whether the communication terminal supports the control according to the present invention, as the UL signals are transmitted in a slot just before restart of transmission, as described in the above embodiment, when the communication terminal supports the control according to the present invention.

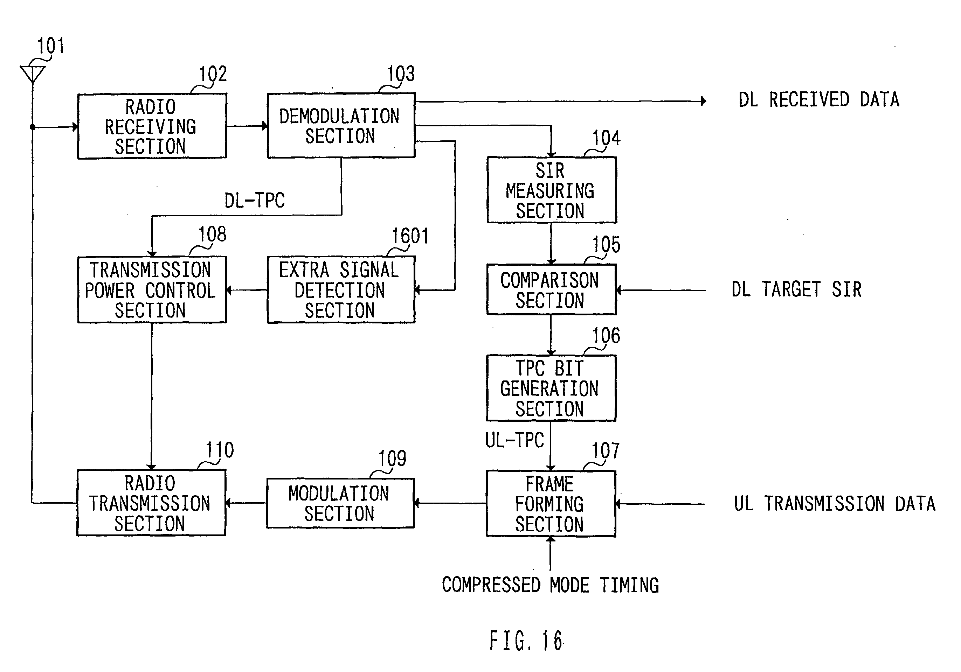

FIG. 16 shows a block diagram of a configuration of a base station device according to an embodiment 5 of the present invention. In the base station device shown in FIG. 16, parts similar to those in the base station device shown in FIG. 1 are denoted by the same reference numbers as those in FIG. 1, and detailed description will be eliminated.

The base station device shown in FIG. 16 is provided with an extra signal detection section 1601 for detection of UL signals (extra signals) in a slot just before restart of transmission. In the above extra signal detection section 1601, the presence of extra signals are detected, for example, by measuring the power of the above extra signals. Moreover, it may be detected by measurement of qualities other than the power of the extra signals in the above extra signal detection section 1601. Furthermore, existing circuits for measurement of received power and quality may be configured to perform the detection in the above section 1601.

In the first place, it is judged whether transmission slots are shorter than seven slots, when the transmission mode is the compressed mode, in the base station device with the above configuration. When the transmission slots are shorter than seven slots, the DL-TPC bit is extracted from the received signals after demodulation in the demodulation section 103, and transmission power control is performed according to the above DL-TPC bit in the transmission power control section 108.

And, SIRS of signals after demodulation are measured in the SIR measuring section 104; the measured SIRS are compared with the UL target SIR in the comparison section 105; and a UL-TPC bit is generated in the TPC bit generation section 106, based on the comparison results. Then, transmission is performed at transmission power under the above transmission power control.

On the other hand, when the transmission slots are longer than seven slots, that is, in case of an interval of no transmission, transmission is not performed. Thereafter, the extra signal detection section 1601 detects extra signals in the slot just before restart of transmission. For example, power of the signals is measured, and the above signals are detected as extra signals, when the above measured results are larger than a predetermined threshold. Thereby, it is confirmed that the above extra signals are transmitted from the communication terminal, and the base station device may identify that the communication terminal supports the control according to the present invention.

When it is judged that the communication terminal supports the control according to the present invention, that is, when the extra signals are detected, the above judgement is fed as control signals to the transmission power control section 108. The DL-TPC bit included in the above extra signals is reliable as described above, and, then, transmission power control is performed in the transmission power control section 108 according to the DL-TPC bit included in the extra signals.

In the base station device, transmission power control is performed according to the DL-TPC bit in the slot before suspension of transmission, when it is judged that the communication terminal does not support the control according to the present invention, that is, when the extra signals are not detected. Transmission power control for the above case is performed in a similar manner to usual cases in the compressed mode.

And, transmission power control is performed so as to converge the transmission power values to the ideal value in the same manner as the embodiment 1, when the transmission mode is a recovery mode just after the compressed mode.

It may be possible to detect communication terminals supporting the control according to the present invention in the base station device according to the present embodiment, and then reliable transmission power control may be performed for the above communication terminal from just after restart of transmission. Thereby, the transmission power values may be quickly converged into the ideal value. In the above case, the transmission power values may be also quickly converged into the ideal value in the communication terminal supporting the control according to the present invention, as the transmission power control of the base station device just after the restart of the transmission is reliably performed.

In the present embodiment, there has been described a case where the power of the extra signals is measured, and the presence of the above extra signals is detected, but the quality of the extra signals may be configured to be measured. In the above case, it may be possible to judge, based on the quality of the extra signals, whether the DL-TPC bit included in the above extra signals is used or not. For example, usual transmission power control in the compressed mode is performed without use of the DL-TPC bit included in the extra signals, when the quality of the extra signals is unfavorable due to fading.

### (Embodiment 6)

In the present embodiment, there will be described a case, where the compressed mode is applied to DLs and not to ULs; a base station device supports the control according to the present invention; and it is not definitely known that communication terminals support the above control. In the above case, it is judged, by a fixed TPC bit included in UL signals during a suspension interval of transmission in the compressed mode, whether the communication terminals support the above control.

When the compressed mode is adopted only for the DLs, there are suspension intervals of transmission on the DLs, and continuous transmission on the ULs. Therefore, the communication terminals transmit the UL signals in the slot just before restart of transmission, whether the communication terminals support the control according to the present invention. Therefore, it may be impossible in the method according to the embodiment 5 to identify whether the communication terminals support the control according to the present invention. On the other hand, the UL-TPC bit during the suspension interval of transmission on the DLs is unreliable.

Therefore, a fixed TPC bit, by which it is possible to identify whether the communication terminals support the control according to the present invention, is used for the UL-TPC bit during the suspension interval of transmission on the DLs. Thereby, it may be possible to judge whether the communication terminals support the control according to the present invention.

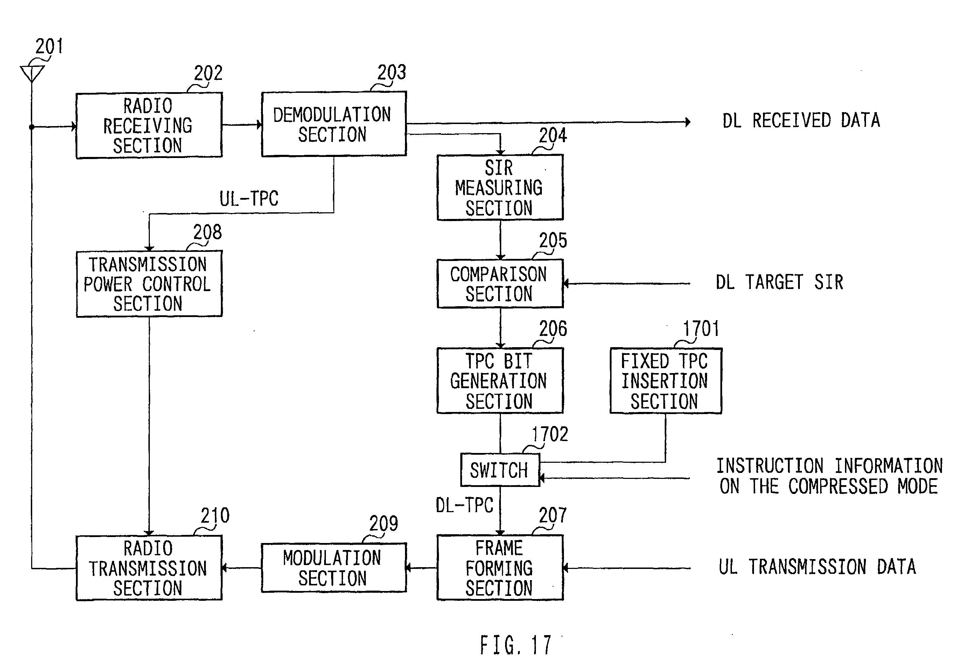

FIG. 17 shows a block diagram of a configuration of a communication terminal according to the present embodiment. In the communication terminal shown in FIG. 17, parts similar to those in the communication terminal shown in FIG. 2 are denoted by the same reference numbers as those in FIG. 2, and detailed description will be eliminated.

The communication terminal shown in FIG. 17 comprises: a fixed TPC insertion section 1701 for insertion of a fixed TPC bit to UL signals in the slot during the suspension interval of transmission; and a switch 1702 to switch, according to the instruction information on the compressed mode, to the TPC bit generated using SIRs obtained from the DL signals, or to the fixed TPC bit.

In the above fixed TPC insertion section 1701, the above TPC bit is continuously transmitted during the suspension interval of transmission, for example, by use of "1" for the TPC bit, when the control according to the present invention is supported, and, by use of "0" for the above bit, when the above control is not supported. Here, "0" may be configured to be used for the TPC bit, when the control according to the present invention is supported, and, "1" may be configured to be done for the above bit, when the above control is not supported. It may be exactly notified to the base station device whether the control according to the present invention is supported or not, as there is less possibility of misidentification of the fixed TPC bit by continuous transmission of the same fixed TPC bit.

In the communication terminal with the above configuration, a DL-TPC bit is extracted from the received signals after demodulation in the demodulation section 203, and transmission power control is performed according to the above DL-TPC bit in the transmission power control section 208, in a usual state.

And, SIRs of signals after demodulation are measured in the SIR measuring section 204; the SIRs measured in the comparison section 205 are compared with the UL target SIR; and a UL-TPC bit is generated in the TPC bit generation section 206 based on the comparison results. At the above time, the switch 1702 is configured to feed the TPC bit from the TPC bit generation section 206 to the frame forming section 207. And transmission is performed at the transmission power under the above transmission power control.

The switch 1702 is configured to be switched so as to feed the TPC bit from the fixed TPC insertion section 1701 to the frame forming section 207 during the suspension interval of DL transmission. The switch 1702 is configured to be switched at a timing corresponding to the suspension interval of DL transmission according to the instruction information for the compressed mode. Moreover, as the suspension interval of transmission is fixed, the above switch 1702 is configured to be switched again so as to feed the TPC bit from the TPC bit generation section 206 to the frame forming section 207 at a timing corresponding to the end of the predetermined suspension interval of transmission.

That is, the fixed TPC bit is fed, during an interval corresponding to the suspension interval of DL transmission, from the fixed TPC insertion section 1701 to the frame forming section 207, where frame forming of UL transmission data and the TPC bit is performed. Thereafter, the transmission signals after frame forming are modulated in the modulation section 209, and transmitted from the antenna 201 to the base station device through the radio transmission section 210. As described above, the communication terminal continuously transmits the above TPC bit during an interval corresponding to the suspension interval of transmission, using "1" for the TPC bit, when the control according to the present invention is supported, and "0", when it is not supported.

The communication terminal supporting the control according to the present invention generates a DL-TPC bit, using the DL signals (signals on the common control channel) just before restart of transmission in the compressed mode, and there is performed transmission to the base station device as UL signals including the above reliable DL-TPC bit.

In the first place, the base station device extracts a fixed TPC bit after demodulation of the UL signals from the communication terminal during a suspension interval of transmission in the compressed mode. Then, the above fixed TPC bit is fed to the transmission power control section, where it is judged, based on the state, that is, "1", or "0" of the fixed TPC bit, whether the communication terminal supports the control according tp the present invention.

In the base station device, transmission power control is performed, using the reliable DL-TPC bit included in the UL signals in the slot just before restart of transmission, when it is judged that the communication terminal supports the control according to the present invention, that is, when the fixed TPC bit "1" is obtained during the suspension interval of transmission.

In the base station device, transmission power control is performed according to the DL-TPC bit in the slot just before suspension of transmission, when it is judged that the communication terminal does not support the control according to the present invention, that is, when the fixed TPC bit "0" is obtained during the suspension interval of transmission. Transmission power control for the above case is performed in a similar manner to usual cases in the compressed mode.

And, the transmission power control is performed so as to converge the transmission power values to the ideal value in the same manner as in the embodiment 1, when the transmission mode is a recovery mode just after the compressed mode.

Even when the compressed mode is not adopted for the ULs, it may be possible, in the present embodiment, for the base station device to identify the communication terminals supporting the control according to the present invention, using the fixed TPC bit transmitted by the above terminals during an interval corresponding to the suspension interval of transmission; and transmission power control may be reliably performed in the above terminals from just after restart of transmission. Thereby, the transmission power values may be quickly converged into the ideal value. In the above case, the transmission power values may be also quickly converged into the ideal value in the communication terminal supporting the control according to the present invention, as the transmission power control in the base station device just after restart of transmission is reliably performed.

### (Embodiment 7)

In the present embodiment, a case where the communication terminal decides ON/OFF of the control in the above embodiment will be described.

When the compressed mode is adopted for ULs, and the control method according to the present invention is used, extra signals will be transmitted in a slot just before restart of transmission. The above extra signals are required to be reliable, and the unreliable ones will waste the power. Therefore, power consumption of the communication terminals may be controlled, as the control method according to the present invention is configured to be selected for introduction by the above terminal, only when the extra signals are reliable.

The control according to the present invention is not performed, that is, OFF control of the transmission power control at restart of transmission after transmission of the extra signals in the slot just before restart of transmission is configured to be performed in the communication terminal in case of the following cases, as the extra signals are judged to be unreliable, for example, when the Doppler frequency is very high; when there is much quick fading; and so on. Moreover, OFF control of the control according to the present invention is also performed in the communication terminals, even when there is no reply, after a long monitoring term (a plurality of frames), to extra signals transmitted, as it is assumed that the base station device does not support the control according to the present invention.

Hereinafter, ON/OFF of the control according to the present invention by the communication terminals will be described. Now, there will be described a case where ON/OFF of the control according to the present invention is performed based on the level of the Doppler frequencies monitored by the communication terminals.

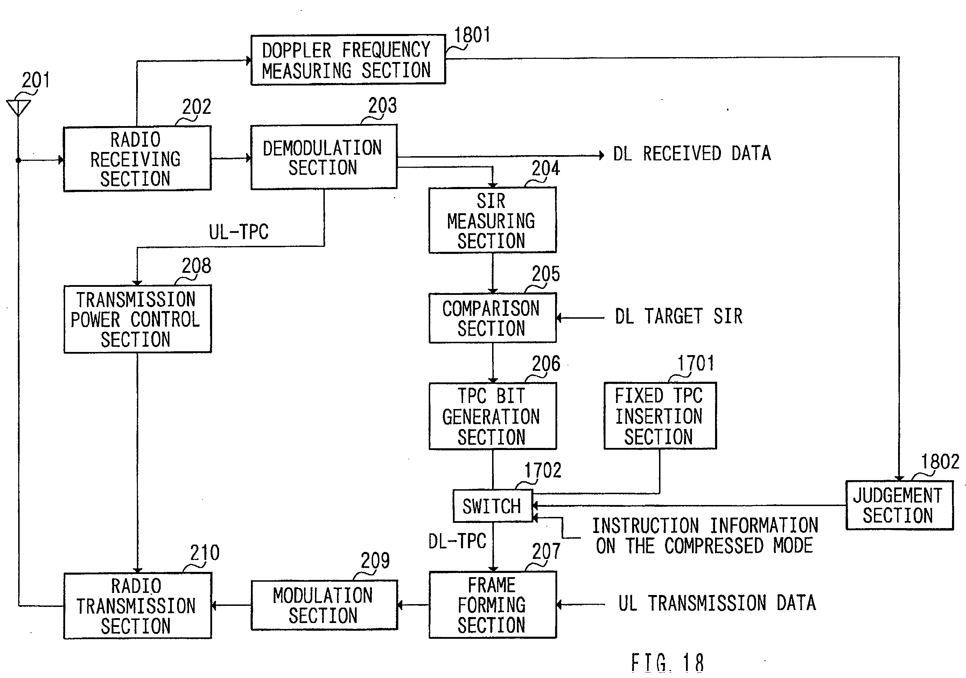

FIG. 18 shows a block diagram of a configuration of a communication terminal according to the embodiment 7 of the present invention. In the communication terminal shown in FIG. 18, parts similar to those in the communication terminal shown in FIG. 17 are denoted by the same reference numbers as those in FIG. 17, and detailed description will be eliminated.

The communication terminal shown in FIG. 18 comprises: a Doppler frequency measuring section 1801 for measurement of the Doppler frequencies of DL signals; and a judgment section 1802 for judgement of ON/OFF of the control according to the present invention, based on the Doppler frequencies measured in the above Doppler frequency measuring section 1801.

In the communication terminal with the above configuration, the Doppler frequencies of the DL signals are monitored. Specifically, the Doppler frequencies of the received signals are measured in the Doppler frequency measuring section 1801. As conventional methods may be used for measuring the above Doppler frequencies, the specific description for them will be eliminated. The measured results of the above Doppler frequencies are fed to the judgment section 1802.

In the above section 1802, it is judged, based on the measured results of the Doppler frequencies, whether the control according to the present invention is performed. For example, a threshold for the Doppler frequencies are previously provided, and OFF control of the control according to the present invention is configured to be performed when the measured Doppler frequencies exceed the above threshold. That is, a control signal is fed from the judgment section 1802 to the switch 1702; insertion of the TPC bit from the fixed TPC insertion section 1701 is stopped; and the switch 1702 is switched so as to feed the TPC bit only from the TPC bit generation section 206 to the frame forming section 207.

On the other hand, ON control of the control according to the present invention is configured to be performed, when the measured Doppler frequencies are equal to or less than the threshold. That is, a control signal is fed from the judgment section 1802 to the switch 1702; insertion of the TPC bit from the fixed TPC insertion section 1701 is properly performed (in the slot just before restart of transmission); and the switch 1702 is switched, simultaneously using the TPC bit generation section 206,so as to feed the TPC bit to the frame forming section 207.

As described above, the power of the communication terminal may be effectively used by ON/OFF control of the control according to the present invention, based on the level of the Doppler frequencies. Moreover, the ON/OFF control of the control according to the present invention may be configured to be performed based on the information on the monitored results after monitoring whether the Doppler frequencies are within a predetermined range, or whether there is quick fading, though there has been described a case, in the present embodiment, where the ON/OFF control of the control according to the present invention is performed based on the level of the Doppler frequencies.

Here, when the base station device does not support the control according to the present invention, the control according to the present invention may not be performed, that is, the extra signals may not be identified in the base station device, whether the communication terminal supports the control according to the present invention or not. The above control is similar to usual control in the compressed mode. However, when the compressed mode is not used for the communication terminal, previous transmission of the extra signals in the slot just before restart of transmission enables accurate transmission power control of continuous transmission to be performed in the communication terminal from a point of restart of transmission of the base station device.

The present invention is not limited to the above embodiments 1 - 7, and variations may be executed with modifications. For example, the present invention may be applied to cases, other than those in the compressed mode, where signal transmission is not performed for a while, though the cases in the compressed mode are described in the above embodiments 1 - 7 for the above cases with suspension of signal transmission. Moreover, the present invention is not limited to the frame formats (frame configurations, number of slots, and so on) in the above embodiments 1-7. Furthermore, the above embodiments 1-7 may be properly combined for execution.

The base station device according to the present invention has a configuration comprising: a receiving section to receive information for transmission power control transmitted from communication terminals in the slot just before restart of signal transmission after suspension for a predetermined interval; and a transmission power control section to control transmission power, based on the above information for transmission power control.

According to the above configuration, information for transmission power control generated based on DL quality may be reflected at restart of transmission. Thereby, previous transmission power control may be performed at restart of transmission, and time for convergence of the transmission power into an ideal value may be reduced. Therefore, compensation may be previously performed by previous transmission power control before restart of transmission to cause smaller compensation amount for deviations from the ideal value. Thereby, signal quality of user sides may be quickly improved, or interference with signals of other users may be reduced.

The base station device according to the present invention has a configuration comprising: a transmission section to transmit transmission signals including known signals in the slot just before restart of signal transmission after suspension for a predetermined interval; a receiving section to receive signals including information for transmission power control generated at the communication end sides, based on the quality of the above known signals; and a transmission power control section to control transmission power, based on the above information for transmission power control.

According to the above configuration, known signals may be transmitted in the slot just before restart of signal transmission after the predetermined interval of suspension; and information for transmission power control generated based on the quality of the above known signals may be reflected at restart of transmission. Thereby, previous transmission power control may be performed at restart of transmission, and time for convergence of the transmission power into an ideal value may be reduced. Therefore, compensation may be previously performed by previous transmission power control before restart of transmission to cause smaller compensation amount for deviations from the ideal value. Thereby, signal quality of user sides may be quickly improved, or interference with signals of other users may be reduced.

The base station device according to the present invention has the above configuration, wherein the above predetermined interval is a suspension interval of transmission in the compressed mode.

According to the above configuration, the transmission power may be quickly converged into the ideal value from restart of transmission in the compressed mode to monitor other channels at the base station side during the interval of suspension of signal transmission. Thereby, signal quality of user sides may be quickly improved, or interference with signals of other users may be reduced.

The base station device according to the present invention has the above configuration, comprising a detection section to detect whether information for transmission power control has been transmitted from communication terminals in the slot just before restart of signal transmission after the above predetermined interval of suspension.

According to the above configuration, reliable transmission power control may be performed for communication terminals just after restart of transmission, as it may be possible to detect the above communication terminals supporting the control according to the present invention. Thereby, transmission power values may be quickly converged into an ideal value. In the above case, the transmission power values may be still quickly converged into the ideal value in communication terminals supporting the control according to the present invention, as reliable transmission power control of the base station device is performed just after restart of transmission.

The base station device according to the present invention has the above configuration, comprising an identification section to identify whether the transmission power control is performed or not, based on a fixed transmission power control bit, which is transmitted from communication terminals during suspension for the above predetermined interval.

According to the above configuration, the base station device may identify communication terminals supporting the control according to the present invention, using the fixed TPC bit transmitted by the communication terminals during an interval corresponding to the suspension interval of transmission, and reliable transmission power control may be performed for the above communication terminals just after restart of transmission, even when the compressed mode is not adopted for the ULs. Thereby, transmission power values may be quickly converged into an ideal value. In the above case, the transmission power values may be also quickly converged into the ideal value in communication terminals supporting the control according to the present invention, as reliable transmission power control of the base station device is performed just after restart of transmission.

The communication terminals according to the present invention have a configuration comprising: a receiving section to receive signals including known signals transmitted at the base station side in the slot just before restart of signal transmission after suspension for a predetermined interval; a control information generation section to generate information for transmission power control based on the quality of the above known signals; and a transmission section to transmit transmission signals including the above information for transmission power control.

According to the above configuration, information for transmission power control may be reflected at restart of transmission, as the above information for transmission power control generated based on the quality of the DLs may be previously transmitted on the ULs. Thereby, previous transmission power control may be performed at restart of transmission, and time for convergence of the transmission power into an ideal value may be reduced. Therefore, compensation may be previously performed by previous transmission power control before restart of transmission to cause smaller compensation amount for deviations from the ideal value. Thereby, signal quality of user sides may be quickly improved, or interference with signals of other users may be reduced.

The communication terminals according to the present invention have the above configuration, wherein the ratio of the above information for transmission power control in the above transmission signals is higher than that of usual data transmission.

According to the above configuration, the information for transmission power control may be more exactly transmitted to the base station device with less errors, as the transmission rate of the information becomes higher, and, then, the transmission power control may be reliably performed in the base station device.

The communication terminals according to the present invention have the above configuration, wherein the above transmission signals repeatedly include information for transmission power control. According to the above configuration, the information for transmission power control may be exactly received at the base station device, as the above information may be transmitted with less errors.

The communication terminals according to the present invention have the above configuration, wherein the above information for transmission power control includes information on a step width. According to the above configuration, information on the number of control steps in the transmission power control may be carried, as more amount of signals (number of bits) than that of usual cases may be allotted to the information for transmission power control. Thereby, transmission power values may be quickly converged into the ideal value by dynamic transmission power control in the recovery mode from restart of transmission.

The communication terminals according to the present invention have a configuration comprising: a receiving section to receive signals including common known signals common to all users, and known signals transmitted in the slot just before suspension of signal transmission at the communication end side; a power ratio calculation section to obtain a transmission power ratio between the above known signals and the above common known signals; a control information generation section to generate information for transmission power control based on the quality obtained using the above transmission power ratio and the transmission power of the common known signals transmitted in the slot just before restart of the above signal transmission after the predetermined interval of suspension; and a transmission section to transmit transmission signals including the above information for transmission power control.

According to the above configuration, information for transmission power control of a dedicated physical channel under suspension of transmission is obtained, using transmission power ratios and common known signals, which are constantly transmitted; and the above information for transmission power control is transmitted to the base station device side. Therefore, transmission power control may be previously performed at restart of transmission, even without transmission of known signals from the base station device side during a suspension interval of transmission, and, then, time for convergence of the transmission power into the ideal value may be reduced. Accordingly, compensation may be previously performed by previous transmission power control before restart of transmission to cause smaller compensation amount for deviations from the ideal value. Thereby, signal quality of user sides may be quickly improved, or interference with signals of other users may be reduced.

The communication terminals according to the present invention have the above configuration, wherein the base station device comprises a second control information generation section to generate fixed information for transmission power control during an interval corresponding to a suspension interval of signal transmission; and the above transmission section transmits signals including the above fixed information for transmission power control during an interval corresponding to the suspension interval of signal transmission.

According to the above configuration, it may be notified, using a fixed TPC bit which is transmitted during an interval corresponding to the suspension interval of transmission, to the base station device that the control according to the present invention is supported, even when the compressed mode is not adopted for the ULs.

The communication terminals according to the present invention have the above configuration, comprising a judgement section to perform, according to situations of the DL signals, ON/OFF control of the transmission power control using known signals transmitted in the slot just before restart of signal transmission after the above predetermined interval of suspension.

The communication terminals according to the present invention have the above configuration, wherein the above judgment section performs ON/OFF control of the transmission power control, based on the Doppler frequencies of the DL signals.

According to the above configurations, the power of the communication terminals may be effectively used by switching of ON/OFF control of the control according to the present invention.

A method for transmission power control according to the present invention comprises a step for communication terminals to generate information for transmission power control, based on the quality of the above known signals in the above first signals, and to transmit second signals including the above information; and a step for the above base station side to perform transmission power control, based on the above information for transmission power control.

According to the above method, the information for transmission power control, which is generated based on based on the quality of the DLs, may be reflected at restart of transmission. Thereby, previous transmission power control may be performed at restart of transmission, and, then, time for convergence of transmission power values into an ideal value may be reduced. Accordingly, compensation may be previously performed by previous transmission power control before restart of transmission to cause smaller compensation amount for deviations from the ideal value. Thereby, signal quality of user sides may be quickly improved, or interference with signals of other users may be reduced.

A method for transmission power control according to the present invention comprises a step for the base station side to transmit first signals including known signals in the slot just before restart of signal transmission after a predetermined interval of suspension; a step for communication terminals to generate information for transmission power control, based on the quality of the above known signals in the above first signals, and to transmit second signals including the above information; and a step for the above base station side to perform transmission power control, based on the above information for transmission power control.

According to the above method, known signals may be transmitted in the slot just before restart of signal transmission after a predetermined interval of suspension, and information for transmission power control generated based on the quality of the above known signals may be reflected at restart of transmission. Thereby, previous transmission power control may be performed at restart of transmission, and, then, time for convergence of the transmission power values into an ideal value may be reduced. Accordingly, compensation may be previously performed by previous transmission power control before restart of transmission to cause smaller compensation amount for deviations from the ideal value. Thereby, signal quality of user sides may be quickly improved, or interference with signals of other users may be reduced.

A method for transmission power control according to the present invention comprises a step for the base station side to transmit first signals including common known signals common to all users, and known signals in the slot just before suspension of signal transmission; and steps for communication terminals to obtain a transmission power ratio between the above common known signals and the above known signals, to generate information for transmission power control based on the quality obtained, using the above transmission power ratio and the transmission power of the common known signals transmitted from the above base station device in the slot just before restart of signal transmission after a predetermined interval of suspension; to transmit second signals including the above information for transmission power control, and to perform transmission power control, based on the above information for transmission power control.

According to the above method, information for transmission power control of a dedicated physical channel under suspension of transmission is obtained, using transmission power ratios and common known signals, which are constantly transmitted; and the above information for transmission power control is transmitted to the base station device side. Therefore, transmission power control may be previously performed at restart of transmission, even without transmission of known signals from the base station device side during a suspension interval of transmission, and, then, time for convergence of the transmission power into the ideal value may be reduced.

Accordingly, compensation may be previously performed by previous transmission power control before restart of transmission to cause smaller compensation amount for deviations from the ideal value. Thereby, signal quality of user sides may be quickly improved, or interference with signals of other users may be reduced.

As described above, there is transmitted information for transmission power control (TPC bit), which is configured to compensate the

## Claims

1. A base station device, comprising:
receiving means for reception of information for transmission power control transmitted from a communication terminal side in a slot just before restart of signal transmission after suspension for a predetermined interval; and
transmission power control means for control of transmission power, based on said information for transmission power control.

2. A base station device, comprising:
transmission means for transmission of transmission signals including known signals in a slot just before restart of signal transmission after suspension for a predetermined interval;
receiving means for reception of signals including information for transmission power control generated at a communication terminal side, based on the quality of said known signals; and
transmission power control means for control of transmission power, based on said information for transmission power control.

3. A base station device according to claim 1, wherein said predetermined interval is a suspension interval of transmission in the compressed mode.

4. A base station device according to claim 1, comprising:
detection means for detection whether information for transmission power control has been transmitted from a communication terminal side in a slot just before restart of signal transmission after said predetermined interval of suspension.

5. A base station device according to claim 1, comprising:
identification means for identification whether said transmission power control is performed or not, based on a fixed transmission power control bit, which is transmitted from a communication terminal during suspension for said predetermined interval.

6. A communication terminal, comprising:
receiving means for reception of signals including known signals transmitted at the base station side in a slot just before restart of signal transmission after suspension for a predetermined interval;
first control information generation section for generation of information for transmission power control based on the quality of said known signals; and
transmission means for transmission of transmission signals including said information for transmission power control.

7. A communication terminal according to claim 6, wherein a ratio of said information for transmission power control in said transmission signals is higher than that of usual data transmission.

8. A communication terminal according to claim 7, wherein said transmission signals repeatedly include information for transmission power control.

9. A communication terminal according to claim 7, wherein said information for transmission power control includes information on a step width.

10. A communication terminal, comprising:
receiving means for reception of signals including common known signals common to all users, and known signals transmitted in a slot just before suspension of signal transmission at the communication end side;
power ratio calculation means for obtaining a transmission power ratio between said known signals and said common known signals;
first control information generation means for generating information for transmission power control based on the quality obtained using said transmission power ratio and the transmission power of the common known signals transmitted in a slot just before restart of said signal transmission after a predetermined interval of suspension; and
transmission means for transmission of transmission signals including said information for transmission power control.

11. A communication terminal according to claim 6, comprising:
second control information generation means for generation of fixed information for transmission power control during an interval corresponding to a suspension interval of signal transmission; wherein
said transmission means transmits signals including said fixed information for transmission power control during an interval corresponding to said suspension interval of signal transmission.

12. A communication terminal according to claim 6, comprising:
judgement means for ON/OFF control of transmission power control according to situations of DL signals, using known signals transmitted in a slot just before restart of signal transmission after said predetermined interval of suspension.

13. A communication terminal according to claim 12, wherein said judgment means performs ON/OFF control of said transmission power control, based on the Doppler frequencies of DL signals.

14. A method for transmission power control, comprising:
a step for a communication terminal side to generate information for transmission power control, based on the quality of said known signals in said first signals, and to transmit second signals including said information; and
a step for said base station side to perform transmission power control, based on said information for transmission power control.

15. A method for transmission power control, comprising:
a step for a base station side to transmit first signals including known signals in a slot just before restart of signal transmission after a predetermined interval of suspension;
a step for a communication terminal side to generate information for transmission power control, based on the quality of said known signals in said first signals, and to transmit second signals including said information; and
a step for said base station side to perform transmission power control, based on said information for transmission power control.

16. A method for transmission power control, comprising:
a step for a base station side to transmit first signals including common known signals common to all users, and known signals in a slot just before suspension of signal transmission;
a step for a communication terminal side to obtain a transmission power ratio between said common known signals and said known signals;
a step for said terminal side to generate information for transmission power control based on the quality obtained, using said transmission power ratio and the transmission power of common known signals transmitted from said base station device in a slot just before restart of said signal transmission after a predetermined interval of suspension; and to transmit second signals including said information for transmission power control; and
a step for said terminal side to perform transmission power control, based on said information for transmission power control.
